# EUROPÄISCHE PATENTANMELDUNG

(11) **EP 1 832 718 A1**
(43) Veröffentlichungstag der Anmeldung: **12.09.2007**
(21) Anmeldenummer: 07004526.5
(22) Anmeldetag: 06.03.2007
(51) Int. Cl.: F01L 1/02, F01L 1/344, F01L 1/356, F16H 49/00

(54) **Vorrichtung zur Nockenwellenverstellung**

(30) Priorität: 06.03.2006 DE 102006010649
(71) Anmelder: Ovalo GmbH, 65555 Limburg a. d. Lahn (DE)
(72) Erfinder: Gilges, Siegmar, Dipl.-Ing., 65307 Bad Schwalbach (DE); Scholz, Jörg, Dipl.-Ing., 56235 Ransbach-Baumbach (DE)
(74) Vertreter: Müller, Eckhard

(57) **Zusammenfassung**

Die Erfindung betrifft eine Vorrichtung (1) zum Verstellen der Drehlage wenigstens einer Nockenwelle (3; 3') eines Verbrennungsmotors (2) relativ zur Drehlage einer die Nockenwelle (3; 3') antreibenden Welle (4), mit wenigstens einem Verstellmotor (6; 6'), zum Erzeugen einer Verstellbewegung zum Verstellen der Drehlage der Nockenwelle (3; 3') relativ zur Drehlage der Welle (4) und mit wenigstens einem Getriebe (5; 5'; 5") in Art eines Überlagerungsgetriebes, welches wenigstens zwei Eingänge (11, 12) und einen Ausgang (13) aufweist, wobei die Abtriebswelle (7) des Verstellmotors (6; 6') auf den einen Eingang (11) und die Antriebswelle (4) auf den anderen Eingang (12) wirkt und die daraus resultierende Drehbewegung über den Ausgang (13) auf die Nockenwelle (3; 3') wirkt, und der Verstellmotor (6) ortsfest bezüglich des Verbrennungsmotors (2) gehalten ist. Erfindungsgemäß ist das Getriebe ein Spannungswellengetriebe (5; 5'; 5") und es sind Mittel (9; 9'; 14) zum Ausgleichen der Differenz zwischen der Drehzahl an zumindest dem mit der Antriebswelle (4) wirkverbundenen Eingang (12) des Spannungswellengetriebes (5, 5'; 5") und seinem Drehzahlanteil am Ausgang (13) des Spannungswellengetriebes (5, 5'; 5") vorgesehen sind (Fig. 1).

## Beschreibung

Die Erfindung betrifft eine Vorrichtung zum Verstellen der Drehlage wenigstens einer Nockenwelle eines Verbrennungsmotors relativ zur Drehlage einer die Nockenwelle antreibenden Welle, insbesondere Kurbelwelle des Verbrennungsmotors, mit wenigstens einem Verstellmotor, insbesondere Elektromotor, zum Erzeugen einer Verstellbewegung zum Verstellen der Drehlage der Nockenwelle relativ zur Drehlage der Welle und mit wenigstens einem Getriebe in Art eines Überlagerungsgetriebes, welches wenigstens zwei Eingänge und einen Ausgang aufweist, wobei die Abtriebswelle des Verstellmotors auf den einen Eingang und die Antriebswelle, vorzugsweise über einen Steuertrieb, auf den anderen Eingang wirkt und die daraus resultierende Drehbewegung über den Ausgang auf die Nockenwelle wirkt und der Verstellmotor ortsfest des Verbrennungsmotors gehalten ist.

### Stand der Technik

Eine derartige Vorrichtung zur Nockenwellenverstellung ist aus der DE 103 52 255 A1 bekannt. Dort ist zum Verstellen der relativen Drehwinkellage einer Nockenwelle gegenüber der Kurbelwelle einer Brennkraftmaschine ein Verstellgetriebe vorgesehen, welches als Dreiwellengetriebe ausgebildet ist. Dabei ist der Verstellmotor der Nockenwellen-Verstellvorrichtung ortsfest bezüglich des Gehäuses der Brennkraftmaschine gehalten.

Eine ähnliche Vorrichtung zur Nockenwellenverstellung ist aus der EP 1 043 482 A2 und der WO 95/00748 A1 bekannt. Dort ist der die Verstellbewegung für die Nockenwelle erzeugende Verstellmotor mit der Nockenwelle drehfest verbunden, so dass bei rotierender Nockenwelle immer auch der gesamte Verstellmotor mitdreht.

Es ist dadurch nur mit hohem konstruktivem und technischem Aufwand eine Stromzuführung zu dem Verstellmotor realisierbar, insbesondere wenn der Verstellmotor innerhalb des Ölraumes des Verbrennungsmotors angeordnet ist. Sofern die Stromzuführung zu dem rotierenden Verstellmotor durch Schleifkontakte erfolgt, ergibt sich zudem auch ein erhöhter Wartungsaufwand, da die Schleifkontakte verschleißen und somit in regelmäßigen Abständen auszutauschen sind.

Weitere Nockenwellen-Verstellvorrichtungen sind aus der DE 195 42 024 A1, und DE 10 2004 033 894 A1 bekannt.

Aus dem Produktkatalog der Harmonic Drive AG, 5/89 (untere Darstellung), ist eine Getriebeanordnung mit einem Spannungswellengetriebe bekannt, welche in Druckmaschinen zur Anwendung kommt .

### Aufgabenstellung

Der Erfindung liegt die Aufgabe zugrunde, eine Vorrichtung zur Nockenwellenverstellung mit den eingangs genannten Merkmalen vorzuschlagen, welche wartungsfrei, besonders kompakt bauend und gewichtsmäßig sehr leicht ist, ohne dass dazu die ortsfeste Anordnung des Verstellmotors aufgegeben wird.

### Erfindung und vorteilhafte Wirkungen

Zur Lösung der Aufgabe wird eine Vorrichtung zur Nockenwellenverstellung vorgeschlagen, welche die in Anspruch 1 genannten Merkmale aufweist. Die Vorrichtung zeichnet sich u. a. dadurch aus, dass das Getriebe ein Spannungswellengetriebe ist und Mittel vorgesehen sind, um die Differenz zwischen der Drehzahl an zumindest dem mit der Antriebswelle wirkverbundenen Eingang des Spannungswellengetriebes und seinem Drehzahlanteil am Ausgang des Spannungswellengetriebes auszugleichen.

Das Spannungswellengetriebe ist besonders kompakt bauend und gewichtsmäßig sehr leicht. Darüber hinaus ist das Spannungswellengetriebe besonders wartungsfrei. Dies alles sind Eigenschaften, durch welche das Spannungswellengetriebe besonders für den Einsatz zur Nockenwellenverstellung geeignet ist. Durch die Ausgleichsmittel ist darüber hinaus erreicht, dass die so genannte innere Untersetzung bzw. Übersetzung des Spannungswellengetriebes kompensiert werden kann, so dass trotz des Vorhandenseins des Überlagerungsgetriebes im Kraftfluss von der Antriebswelle bzw. Kurbelwelle zur Nockenwelle lediglich das durch den Steuerantrieb vorgegebene Drehzahlverhältnis zwischen Antriebswelle bzw. Kurbelwelle und Nockenwelle zu tragen kommt. Selbstverständlich können die Ausgleichsmittel alternativ oder zusätzlich auch auf den mit dem Verstellmotor wirkverbundenen Eingang des Getriebes wirken. In diesem Fall kommt es zu einem Ausgleichen der Differenz zwischen der Drehzahl an jenem Eingang und seinem Drehzahlanteil am Ausgang des Getriebes. Die Ausgleichsmittel sind insofern flexibel einsetzbar.

Bei der Nockenverstellvorrichtung ist ein Mitdrehen des Verstellmotors, also seines Gehäuses, mit der Nockenwelle verhindert, so dass die Stromzuführung zum Verstellmotor auf technisch einfache Weise und mit geringem konstruktivem Aufwand realisierbar ist. Ein Einsatz von verschleißenden Schleifkontakten ist ferner nicht erforderlich. Insofern ist durch die ortsfeste Anordnung des Verstellmotors eine wartungsfreie Stromzuführung möglich.

Nach einer ersten Ausgestaltung der Erfindung ist es vorgesehen, dass die Ausgleichsmittel durch wenigstens eine mit dem Getriebe gekoppelte Getriebestufe gebildet sind, welche eine die Drehzahldifferenz, also die Differenz zwischen der Drehzahl an einem der Eingänge des Getriebes und seinem Drehzahlanteil am Ausgang, im Wesentlichen kompensierende Übersetzung bzw. Untersetzung aufweisen. Diese Maßnahme ist technisch einfach zu realisieren, quasi wartungsfrei und erfordert im Betrieb des Verbrennungsmotors keine zusätzlichen regelungs- bzw. steuerungstechnischen Maßnahmen zum Kompensieren der Drehzahldifferenz.

Dabei bietet es sich an, dass die wenigstens eine Getriebestufe dem Getriebe eingangsseitig vorgeschaltet ist. Hierdurch ergeben sich Vorteile bzgl. des Bauraumes, da die Getriebestufe im Bereich des Steuertriebes angeordnet werden kann und insofern den ohnehin bereits für den Steuertrieb im Verbrennungsmotor vorhandenen nutzt.

Selbstverständlich kann es auch vorgesehen sein, dass die Getriebestufe dem Getriebe ausgangsseitig nachgeschaltet ist. Auch kann es vorgesehen sein, dass wenigstens zwei Getriebestufen vorgesehen sind, von denen eine Getriebestufe im Getriebe vorgeschaltet und die andere Getriebestufe dem Getriebe nachgeschaltet ist.

Mit Vorteil ist die wenigstens eine Getriebestufe zugleich Teil des Steuertriebes für die Nockenwelle. Dadurch sind zur Realisierung der Getriebestufe keine zusätzlichen Bauteile erforderlich, da die sowieso bereits im Verbrennungsmotor vorhandenen Bauteile genutzt werden. Die Getriebestufe ist auf diese Weise mit wenig Aufwand und geringen Kosten herstellbar. Zudem ist eine Gewichtszunahme aufgrund zusätzlicher Bauteile vermieden.

Alternativ oder ergänzend zur Getriebestufe kann es nach einer anderen Ausgestaltung der Erfindung auch vorgesehen sein, dass die Ausgleichsmittel eine Steuerungs- bzw. Regelungseinrichtung aufweisen, mittels welcher der Verstellmotor derart betreibbar ist, dass dessen Abtriebswelle eine die jeweilige Drehzahldifferenz im Wesentlichen kompensierende Ausgleichsdrehbewegung ausführt. Im Betrieb des Verbrennungsmotors wird also durch den Verstellmotor bzw. dessen Ausgleichsdrehbewegung die innere Über-/Untersetzung des Überlagerungsgetriebes kompensiert, wobei der Verstellmotor zum Verstellen der Drehlage der Nockenwelle relativ zur Drehlage der Antriebswelle zusätzlich die Verstellbewegung ausgeführt. Durch das Ausgleichen mittels des Verstellmotors läßt sich die beim Ausgleichen mittels der Getriebestufe bedingte Änderung der Steuertriebübersetzung vermeiden. Auch sind innerhalb des Verbrennungsmotors keine konstruktiven Änderungen vorzunehmen.

Nach einer weiteren Ausgestaltung der Erfindung ist es vorgesehen, dass der Verstellmotor am Gehäuse des Verbrennungsmotors gehalten ist. Dabei bietet es sich an, dass der Verstellmotor von außen am Gehäuse des Verbrennungsmotors montierbar ist. Der Verstellmotor ist dadurch von außen zugänglich. Der Verstellmotor kann montiert bzw. demontiert werden, ohne dass dazu das Gehäuse des Verbrennungsmotors geöffnet werden muss. Ebenso lassen sich in einfacher Weise Reparaturarbeiten am Verstellmotor durchführen, ohne dazu das Gehäuse des Verbrennungsmotors zu öffnen.

Nach einer weiteren Ausgestaltung der Erfindung ist es vorgesehen, dass der Verstellmotor hinsichtlich seiner Verstellbewegung in Abhängigkeit von vorgegebenen Parametern, wie beispielsweise der Drehzahl des Verbrennungsmotors, steuer- bzw. regelbar ist. Hierdurch ist eine besonders hohe Wirkungsgradsteigerung des Verbrennungsmotors erreichbar, insbesondere wenn auch zeitabhängige Änderungen der Parameter beim Steuern bzw. Regeln berücksichtigt werden.

Nach einer weiteren Ausgestaltung der Erfindung ist es vorgesehen, dass zwei Verstellmotoren und zwei Getriebe zum Verstellen der Drehlage von zwei Nockenwellen relativ zur Drehlage der Antriebswelle vorgesehen sind, wobei vorzugsweise jede Nockenwelle separat von einem der Verstellmotoren über eines der Getriebe hinsichtlich der Drehlage verstellbar ist. Hierdurch können sowohl die Einlassventile des Verbrennungsmotors mittels der einen Nockenwelle als auch die Auslassventile mittels der anderen Nockenwelle jeweils in ihrer Drehlage relativ zur Drehlage der Kurbelwelle verstellt werden.

Dabei bietet es sich an, wenn beide Getriebe die Getriebestufe gemeinsam nutzen. Dadurch kann auf eine zweite Getriebestufe verzichtet werden, so dass eine kostengünstige Herstellung und Gewichtsersparnis erreicht ist.

Eine herstellungstechnisch einfach zu realisierende Maßnahme ist es dabei, dass die Getriebestufe, insbesondere wenigstens ein Getrieberad der Getriebestufe, zwischen den beiden Getrieben angeordnet ist. Dadurch ist eine Abstützung der Getriebestufe bzw. des Getrieberades durch die beiden Getriebe erreicht, so dass bei hohen Drehzahlen entstehenden Vibrationen im Bereich der Nockenwellen entgegengewirkt ist.

Nach einer vorteilhaften Ausgestaltung der Erfindung ist es vorgesehen, dass das als Spannungswellengetriebe ausgebildete Getriebe einen Wellengenerator, einen Flexspline, einen Circular Spline und ggf. einen Dynamic Spline aufweist. Dabei kann das Spannungswellengetriebe in Topfbauweise oder Flachbauweise ausgebildet sein. Gerade die Spannungswellengetriebe in Flachbauweise weisen eine sehr geringe axiale Länge auf.

Es bietet sich beim Einsatz eines Spannungswellengetriebes in Topfbauweise an, die Abtriebswelle des Verstellungsmotors mit dem Wellengenerator, die Nockenwelle mit dem Flexspline oder dem Circular Spline und die Antriebswelle, vorzugsweise über den Steuertrieb, mit dem Circular Spline oder dem Flexspline drehfest zu verbinden.

Sofern ein Spannungswellengetriebe in Flachbauweise eingesetzt wird, bietet es sich ferner an, dass die Abtriebswelle des Verstellmotors mit dem Wellengenerator, die Nockenwelle mit dem Dynamic Spline oder dem Circular Spline und die Antriebswelle, vorzugsweise über den Steuertrieb, mit dem Circular Spline oder dem Dynamic Spline drehfest verbunden sind.

Mit Vorteil bildet der Circular Spline oder der Dynamic Spline zugleich ein Getrieberad der Getriebestufe, wobei insbesondere das Getrieberad an dem Circular Spline bzw. Dynamic Spline angeformt ist. Hierdurch weisen die Getriebebauteile des Spannungswellengetriebes eine Doppelfunktion auf, in dem sie neben ihrer Getriebefunktion im Spannungswellengetriebe zusätzlich auch eine Getriebefunktion bezüglich der Getriebestufe ausüben. Es ist dadurch eine besonders kompakt bauende Verstelleinrichtung realisierbar.

Eine weitere Maßnahme zur Bauraumoptimierung ist es, wenn der Steuertrieb und die Getriebestufe über eine gemeinsame Welle miteinander wirkverbunden sind.

In die gleiche Richtung zielt die Maßnahme bei einem Verbrennungsmotor mit zwei Nockenwellen, von denen lediglich eine der Nockenwellen hinsichtlich ihrer Drehlage relativ zur Drehlage der Antriebswelle verstellbar ist, die nicht-verstellbare Nockenwelle als die gemeinsame Welle zu nutzen. Insofern ist bei dieser Maßnahme die gemeinsame Welle kein zusätzliches Bauteil, sondern ein sowieso bereits im Verbrennungsmotor vorhandenes Bauteil.

Weiterhin bietet es sich an, dass der Steuertrieb ein mit der Antriebswelle drehfest verbundenes erstes Antriebsrad und ein zweites Antriebsrad aufweist, welche mittels eines Übertragungsgliedes, wie beispielsweise eine Kette oder Zahnriemen, miteinander gekoppelt sind, wobei das zweite Antriebsrad über die Getriebestufe die Nockenwelle antreibt. Es weist dadurch der Steuertrieb die bei konventionellen Getrieben ohne Nockenwellenverstellung aufweisenden Bauteile, insbesondere auch in gleicher Anordnung auf, so dass diesbezüglich aufgrund der erfindungsgemäßen Vorrichtung keine baulichen Änderungen am Verbrennungsmotor vorgenommen werden müssen.

Herstellungstechnisch besonders einfach zu realisieren ist es, wenn die wenigstens eine Getriebestufe ein Stirnradgetriebe ist.

Von Vorteil ist es ferner, wenn die Vorrichtung zusammen mit der Nockenwelle oberhalb der Antriebswelle angeordnet ist. Dadurch können die Nockenwellen direkt über den Ventilen eingebaut werden, so dass die Anzahl oszillierender Bauteile, wie beispielsweise Stößelstangen, reduziert ist und somit aufgrund geringerer wirkender Massenkräfte eine höhere Drehzahl des Verbrennungsmotors erreichbar ist.

Bevorzugte Anwendung findet die erfindungsgemäße Vorrichtung in einer Verbrennungskraftmaschine eines Fahrzeuges.

### Ausführungsbeispiele

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform der erfindungsgemäßen Vorrichtung zum Verstellen der Drehlage einer Nockenwelle relativ zur Drehlage einer Antriebswelle in Schnittdarstellung entlang der Schnittlinie A-A gemäß Figur 2,
- Figur 2: die Ausführungsform gemäß Figur 1 mit Darstellung des Steuertriebes für die Nockenwelle als Seitenansicht,
- Figur 3: eine weitere Ausführungsform der erfindungsgemäßen Vorrichtung zur Nockenwellenverstellung in Schnittdarstellung,
- Figur 4: eine andere Ausführungsform der erfindungsgemäßen Vorrichtung zum Verstellen der Drehlage von zwei Nockenwellen relativ zur Drehlage einer Antriebswelle, als Seitenansicht;
- Figur 5: die Ausführungsform gemäß Figur 4 in Schnittdarstellung entlang der Schnittlinie A-A gemäß Figur 4 und
- Figur 6: ein weiteres Ausführungsbeispiel der erfindungsgemäßen Vorrichtung zur Nockenwellenverstellung mit Spannungswellengetrieben in Flachbauweise in Schnittdarstellung.

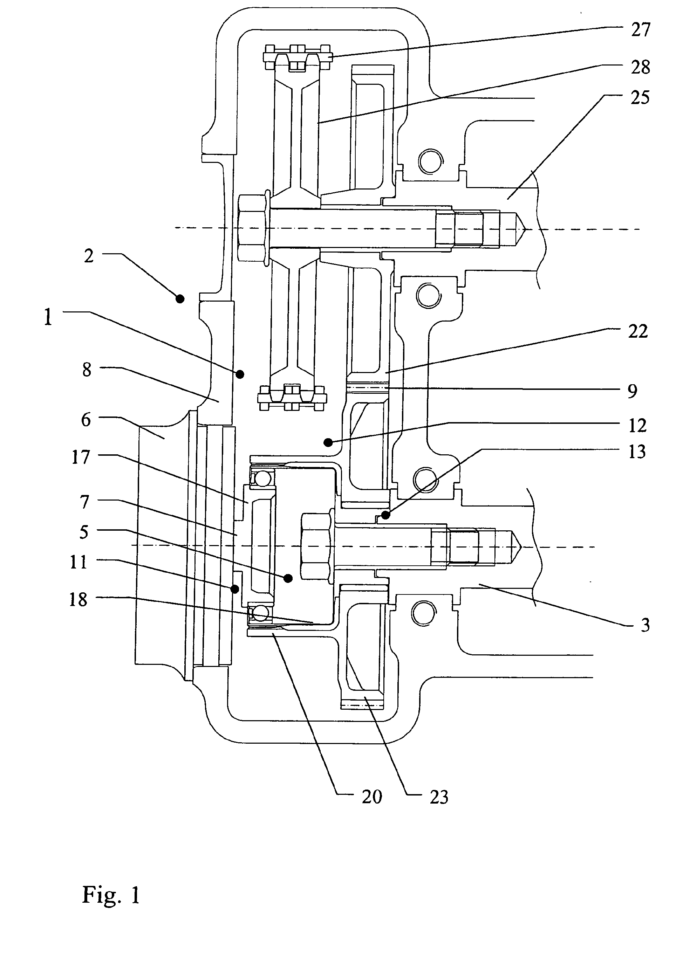

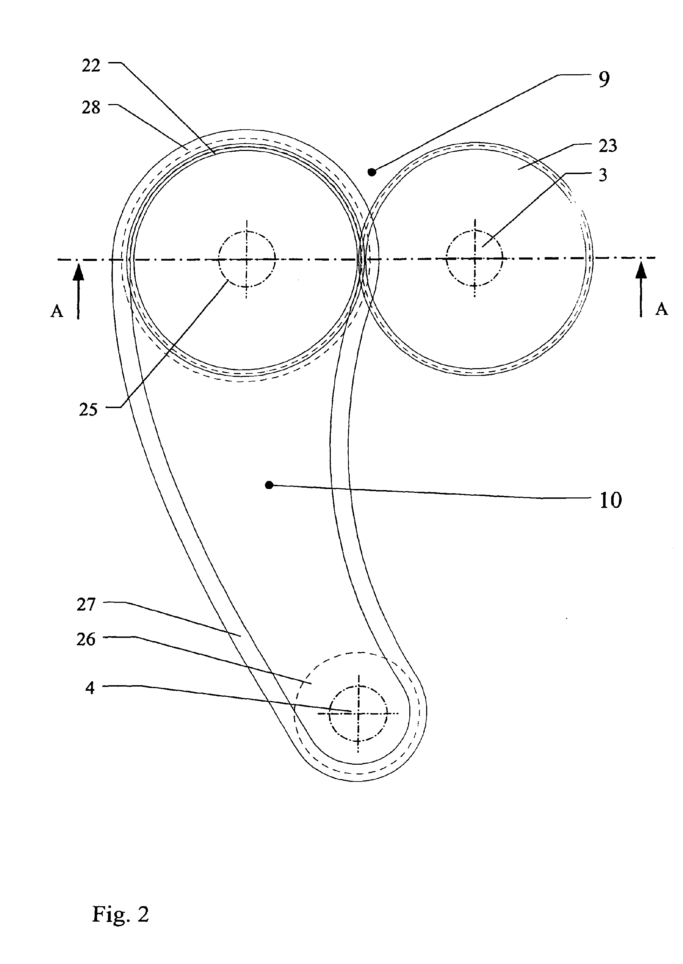

Die Figuren 1 und 2 zeigen - in schematischer Darstellung - eine mögliche Ausführungsform einer Vorrichtung 1 zum Verstellen der Drehlage wenigstens einer Nockenwelle 3 eines Verbrennungsmotors 2 relativ zur Drehlage einer die Nockenwelle 3 antreibenden Welle 4, welche vorliegend der Kurbelwelle des Verbrennungsmotors 2 entspricht.

Die Vorrichtung 1 weist wenigstens einen Verstellmotor 6, insbesondere Elektromotor, zum Erzeugen einer Verstellbewegung zum Verstellen der Drehlage der Nockenwelle 3 relativ zur Drehlage der Antriebswelle 4 auf. Ferner enthält die Vorrichtung 1 wenigstens ein Getriebe 5 in Art eines Überlagerungsgetriebes mit wenigstens zwei Eingängen 11, 12 und einem Ausgang 13. Auf den einen Eingang 11 wirkt die Abtriebswelle 7 des Verstellmotors 6 und auf den anderen Eingang 12 die Antriebswelle 4, vorzugsweise über einen Steuertrieb 10. Das Getriebe 5 überlagert die an deren Eingänge 11 und 12 anliegenden Drehbewegungen, wobei die daraus resultierende Drehbewegung über den Ausgang 13 des Getriebes 5 auf die Nockenwelle 3 wirkt.

Bei der Vorrichtung 1 zur Nockenwellenverstellung ist es vorgesehen, dass der Verstellmotor 6 drehfest am Gehäuse 8 des Verbrennungsmotors 2 gehalten ist. Dadurch ist eine wesentlich einfachere Anbindung des Verstellmotors 6 an die Stromversorgung realisierbar als dies bei den bekannten Vorrichtungen der zur Nockenwellenverstellung mit Elektromotor und Überlagerungsgetribe der Fall ist, da dort der Verstellmotor mit der Nockenwelle mitdreht.

Der Verstellmotor 6 ist von außen am Gehäuse 8 des Verbrennungsmotors 2 montierbar und dementsprechend auch von außen zugänglich, so dass sich insbesondere dadurch eine besonders leichte Handhabe im Hinblick auf einen Austausch des Verstellmotors 6 oder eine Reparatur ergibt.

Bei dem in den Figuren 1 und 2 dargestellten Verbrennungsmotor 2 ist neben der verstellbaren Nockenwelle 3 eine nicht-verstellbare Nockenwelle 25 vorgesehen. Die verstellbare Nockenwelle 3 dient beispielsweise dem Öffnen der (nicht dargestellten) Einlassventile des Verbrennungsmotors 2 und die nicht-verstellbare Nockenwelle 25 zum Öffnen der (nicht dargestellten) Auslassventile.

Die Vorrichtung 1 weist Mittel zum Ausgleichen der Differenz zwischen der Drehzahl an dem mit der Antriebswelle wirkverbundenen Eingang 12 des Getriebes 5 und seinem Drehzahlanteil am Ausgang 13 des Getriebes 5 auf. Diese Ausgleichsmittel sind durch wenigstens eine mit dem Getriebe 5 gekoppelten Getriebestufe 9 in Art eines Stirnradgetriebes gebildet. Um die Differenz zwischen der Drehzahl an dem Eingang 12 und seinem Drehzahlanteil am Ausgang 13 des Getriebes 5 auszugleichen, weist die Getriebestufe 9 eine diese Drehzahldifferenz im Wesentlichen kompensierende Übersetzung bzw. Untersetzung auf.

Die Getriebestufe 9 bzw. das Stirnradgetriebe ist dabei dem Getriebe 5 eingangsseitig vorgeschaltet, wobei ein Getrieberad 22 der Getriebestufe 9 zusammen mit einem Antriebsrad 28 des Steuertriebes 10 auf einer gemeinsamen Welle 25 miteinander wirkverbunden sind, welche in dem Ausführungsbeispiel gemäß der Figuren 1 und 2 die nicht-verstellbare Nockenwelle 25 ist.

Wie insbesondere aus Figur 2 ersichtlich ist, weist der Steuertrieb 10 ein mit der Antriebswelle 4 drehfest verbundenes erstes Antriebsrad 26 und ein die Antriebsbewegung von dem ersten Antriebsrad 26 zu einem zweiten Antriebsrad 28 übertragendes Übertragungsglied in Form einer Kette 27 auf. Von dem zweiten Antriebsrad 28 wird dann die Antriebsbewegung über das Getrieberad 22 der Getriebestufe 9 auf ein weiteres Getrieberad 23 der Getriebestufe 9 übertragen, wobei von diesem Getrieberad 23 die Antriebsbewegung über den Eingang 12 in das Getriebe 5 eingekoppelt wird. Insofern ist die Getriebestufe 9 zugleich Teil des Steuertriebes 10 für die zu steuernde Nockenwelle 3.

Das Getriebe 5 ist bei dem Ausführungsbeispiel gemäß der Figuren 1 und 2 als Spannungswellengetriebe in Topfbauweise ausgebildet mit einem Wellengenerator 17, einem Flexspline 18 und einem Circular Spline 20.

Diese Bauteile des Spannungswellengetriebes 5 sind an sich bekannt und werden daher nicht weiter beschrieben. Es wird diesbezüglich auf die WO 2005/110833 A1 verwiesen.

Bei dem Spannungswellengetriebe 5 in Topfbauweise ist der Flexspline 18 topfförmig ausgebildet, welcher endseits mit der Nockenwelle 3 drehfest verbunden ist. Ferner ist die Abtriebswelle 7 des Verstellmotors 6 mit dem Wellengenerator 17 und die Antriebswelle 4 über den Steuertrieb 10 die Getriebestufe 9 bzw. das Stirnradgetriebe mit dem Circular Spline 20 drehfest verbunden. Der Circular Spline 20 und das Getrieberad 23 der Getriebestufe 9 bilden dabei ein gemeinsames Bauteil.

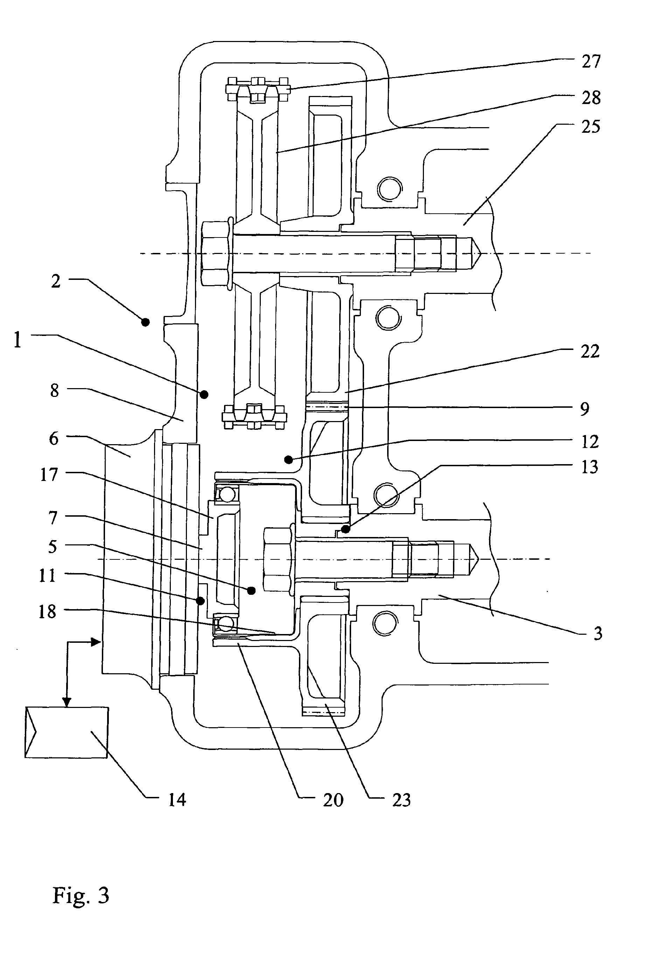

Figur 3 zeigt eine Weiterbildung des Ausführungsbeispieles der Vorrichtung 1 gemäß der Figuren 1 und 2 in schematischer Darstellung. Bauteile, welche mit denen gemäß der Figuren 1 und 2 gleich sind, sind mit gleichen Bezugszeichen versehen; insofern wird auf die Beschreibung zum Ausführungsbeispiel gemäß der Figuren 1 und 2 verwiesen.

Die Vorrichtung 1 gemäß Figur 3 weist gegenüber der Vorrichtung 1 gemäß der Figuren 1 und 2 zusätzlich eine Steuerungs- bzw. Regelungseinrichtung 14 auf, mittels welcher der Verstellmotor 6 derart betreibbar ist, dass dessen Abtriebswelle 7 einen die jeweilige Drehzahldifferenz im Wesentlichen kompensierende Ausgleichsdrehbewegung ausführt. Unter der Drehzahldifferenz ist dabei die Differenz zwischen der Drehzahl an dem mit der Antriebswelle 4 wirkverbundenen Eingang 12 des Getriebes 5 und seinem Drehzahlanteil am Ausgang 13 gemeint. Diese Drehzahldifferenz kann damit bei diesem Ausführungsbeispiel durch zwei Maßnahmen kompensiert werden, nämlich zum einen durch die Getriebestufe 9 und zum anderen durch die Steuerungs- bzw. Regelungseinrichtung 14 in Kombination mit dem Verstellmotor 6.

Selbstverständlich ist der Verstellmotor 6 auch hinsichtlich seiner Verstellbewegung steuer- bzw. regelbar, wobei dies insbesondere in Abhängigkeit von vorgegebenen Parametern, wie beispielsweise der Drehzahl des Verbrennungsmotors 2, erfolgt.

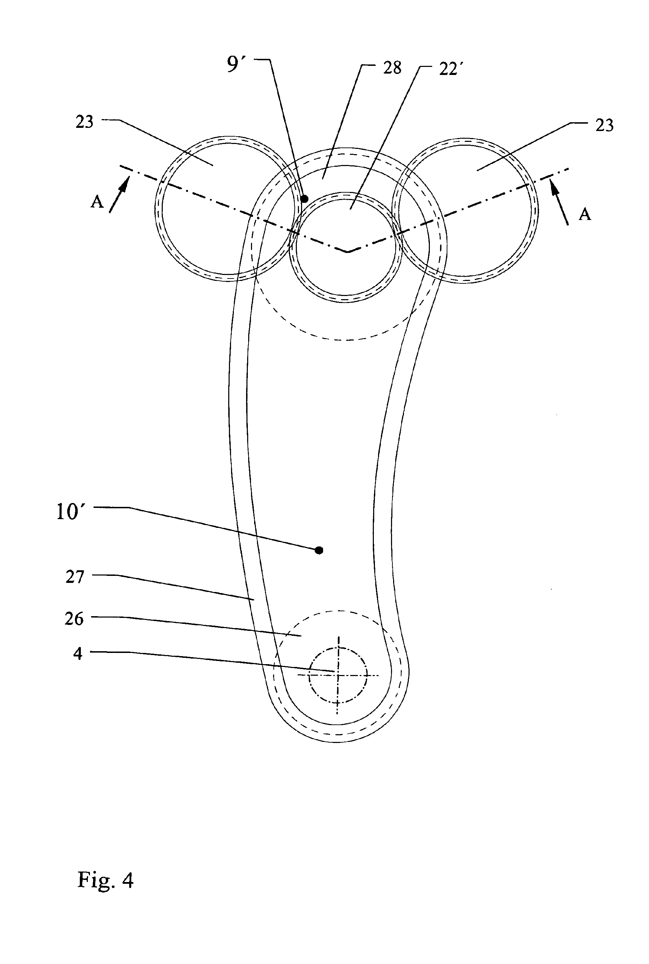

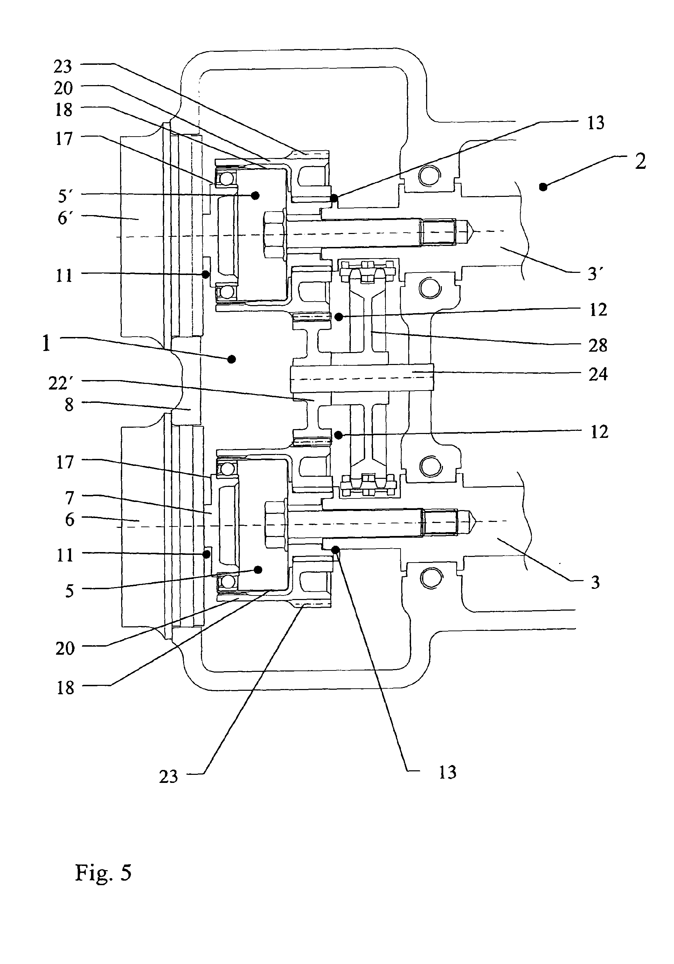

In den Figuren 4 und 5 ist eine weitere Ausführungsform der Vorrichtung 1 zur Nockenwellenverstellung dargestellt. Anders als bei der Vorrichtung 1 gemäß der Figuren 1 bis 3 sind bei dem Ausführungsbeispiel gemäß der Figuren 4 und 5 neben der Nockenwelle 3 auch die zweite Nockenwelle in ihrer Drehlage relativ zur Drehlage der Antriebswelle 4 verstellbar. Dieser zweiten verstellbaren Nockenwelle ist das Bezugszeichen 3' zugeordnet.

Bauteile, welche mit denen der Ausführungsbeispiele gemäß der Figuren 1 bis 4 identisch sind, sind mit gleichen Bezugszeichen versehen; insoweit wird auf die Beschreibung zu jenen Ausführungsbeispielen verwiesen.

Es sind zwei Verstellmotoren 6, 6' und zwei Getriebe 5, 5' zum Verstellen der Drehlage der beiden Nockenwellen 3, 3' relativ zur Drehlage der Antriebswelle 4 vorgesehen, wobei vorzugsweise jede Nockenwelle 3 bzw. 3' separat von einem der Verstellmotoren 6 bzw. 6' über eines der Getriebe 5 bzw. 5' hinsichtlich der Drehlage verstellbar ist.

Die Vorrichtung 1 gemäß der Figuren 4 und 5 unterscheidet sich gegenüber den Ausführungsformen gemäß der Figuren 1 bis 3 unter anderem dadurch, dass eine Getriebestufe 9' in Art eines Stirnradgetriebes vorgesehen ist, mit einem Getrieberad 22', welches in Art eines Zwischenrades zwischen den beiden Getrieben 5, 5' angeordnet ist.

Das Getrieberad 22' ist dabei mit dem zweiten Antriebsrad 28 des Steuertriebes 10' über eine gemeinsame Welle 24 drehfest verbunden.

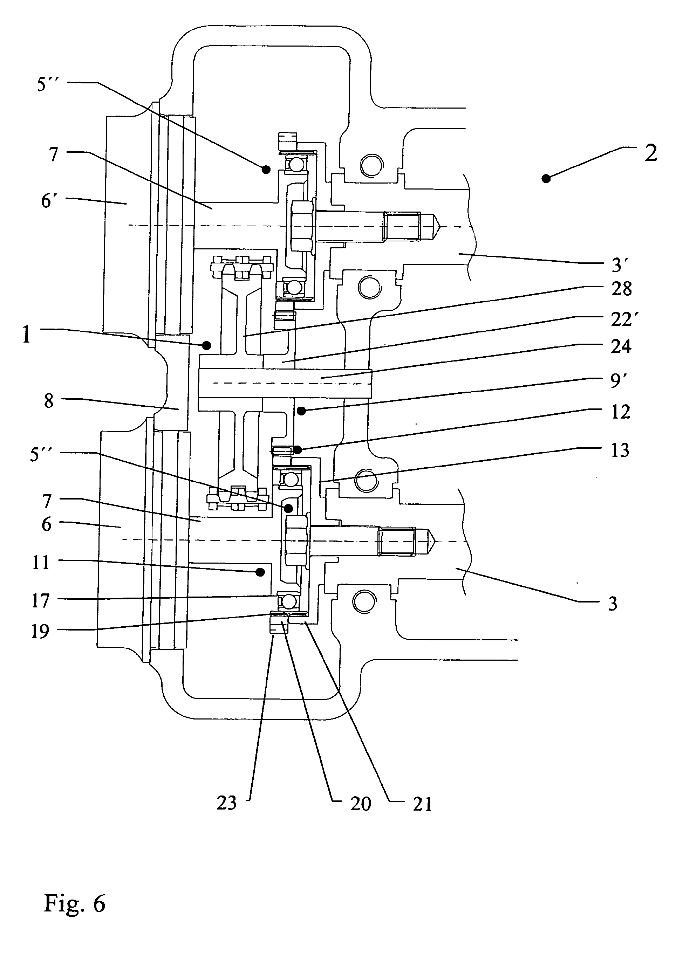

Figur 6 zeigt - in schematischer Darstellung - eine weitere Ausführungsform der Vorrichtung 1. Bauteile, welche mit Bauteilen der Ausführungsbeispiele gemäß Figuren 1 bis 5 identisch sind, sind mit gleichen Bezugszeichen versehen; insofern wird auch bei der Ausführungsform gemäß Figur 6 auf die Ausführungen zu den vorhergehenden Ausführungsbeispielen verwiesen.

Die Vorrichtung gemäß Figur 6 unterscheidet sich gegenüber von der Ausführungsform gemäß der Figuren 4 und 5 unter anderem dadurch, dass das Getriebe als Spannungswellengetriebe (5") in Flachbauweise ausgebildet ist. Der bei dieser Getriebebauform vorliegende Flexspline 19 ist daher nicht topfförmig, sondern ringförmig ausgebildet. Zur Übertragung der Drehbewegung des Flexsplines 19 ist daher zusätzlich ein Dynamic Spline 21 vorgesehen, welcher an seinem einen Ende drehfest mit der Nockenwelle 3 bzw. 3' verbunden ist. Der Dynamic Spline 21 wirkt mit seinem anderen, in Eingriff mit dem Flexspline 19 stehenden Ende als Kupplung, da er die gleiche Zähnezahl wie der Flexspline 19 aufweist.

### Bezugszeichenliste

- 1: Vorrichtung
- 2: Verbrennungsmotor
- 3, 3': Nockenwelle
- 4: Antriebswelle
- 5, 5', 5": Getriebe, Spannungswellengetriebe
- 6, 6': Verstellmotor
- 7: Abtriebswelle
- 8: Gehäuse des Verbrennungsmotors
- 9, 9': Getriebestufe, Stirnradgetriebe
- 10, 10': Steuertrieb
- 11: Eingang
- 12: Eingang
- 13: Ausgang
- 14: Steuerungs- bzw. Regelungseinrichtung
- 17: Wellengenerator
- 18: topfförmiger Flexspline
- 19: ringförmiger Flexspline
- 20: Circular Spline
- 21: Dynamic Spline
- 22, 22': Getrieberad
- 23: Getrieberad
- 24: Welle
- 25: nicht-verstellbare Nockenwelle
- 26: erstes Antriebsrad
- 27: Übertragungsglied, Kette
- 28: zweites Antriebsrad

## Patentansprüche

1. Vorrichtung (1) zum Verstellen der Drehlage wenigstens einer Nockenwelle (3; 3') eines Verbrennungsmotors (2) relativ zur Drehlage einer die Nockenwelle (3; 3') antreibenden Welle (4), insbesondere Kurbelwelle des Verbrennungsmotors (2), mit wenigstens einem Verstellmotor (6; 6'), insbesondere Elektromotor, zum Erzeugen einer Verstellbewegung zum Verstellen der Drehlage der Nockenwelle (3; 3') relativ zur Drehlage der Welle (4) und mit wenigstens einem Getriebe (5; 5', 5") in Art eines Überlagerungsgetriebes, welches wenigstens zwei Eingänge (11, 12) und einen Ausgang (13) aufweist, wobei die Abtriebswelle (7) des Verstellmotors (6; 6') auf den einen Eingang (11) und die Antriebswelle (4), vorzugsweise über einen Steuertrieb (10, 10'), auf den anderen Eingang (12) wirkt und die daraus resultierende Drehbewegung über den Ausgang (13) auf die Nockenwelle (3; 3') wirkt, und der Verstellmotor (6) ortsfest bezüglich des Verbrennungsmotors (2) gehalten ist, **dadurch gekennzeichnet, dass** das Getriebe ein Spannungswellengetriebe (5; 5'; 5'') ist und Mittel (9; 9'; 14) zum Ausgleichen der Differenz zwischen der Drehzahl an zumindest dem mit der Antriebswelle (4) wirkverbundenen Eingang (12) des Spannungswellengetriebes (5, 5'; 5'') und seinem Drehzahlanteil am Ausgang (13) des Spannungswellengetriebes (5, 5'; 5'') vorgesehen sind.

2. Vorrichtung nach Anspruch 1, **dadurch gekennzeichnet, dass** die Ausgleichsmittel durch wenigstens eine mit dem Getriebe (5, 5'; 5") gekoppelte Getriebestufe (9, 9') gebildet sind, welche eine die Drehzahldifferenz im Wesentlichen kompensierende Übersetzung bzw. Untersetzung aufweisen.

3. Vorrichtung nach Anspruch 2, **dadurch gekennzeichnet, dass** die wenigstens eine Getriebestufe (9; 9') dem Getriebe (5; 5'; 5") eingangsseitig vorgeschaltet ist.

4. Vorrichtung nach Anspruch 2, **dadurch gekennzeichnet, dass** wenigstens zwei Getriebestufen vorgesehen sind, von denen eine Getriebestufe dem Getriebe vorgeschaltet und die andere Getriebestufe dem Getriebe nachgeschaltet ist.

5. Vorrichtung nach einem der Ansprüche 2 bis 4, **dadurch gekennzeichnet, dass** die wenigstens eine Getriebestufe (9; 9') zugleich Teil des Steuertriebes (10; 10') für die Nockenwelle (3, 3') ist.

6. Vorrichtung nach Anspruch 1, **dadurch gekennzeichnet, dass** die Ausgleichsmittel eine Steuerungs- bzw. Regelungseinrichtung (14) aufweisen, mittels welcher der Verstellmotor (6) derart betreibbar ist, dass dessen Abtriebswelle (7) eine die jeweilige Drehzahldifferenz im Wesentlichen kompensierende Ausgleichsdrehbewegung ausführt.

7. Vorrichtung nach einem der vorhergehenden Ansprüche, **dadurch gekennzeichnet, dass** der Verstellmotor (6) am Gehäuse (8) des Verbrennungsmotors (2) gehalten ist, vorzugsweise von außen am Gehäuse (8) des Verbrennungsmotors (2) montierbar ist.

8. Vorrichtung nach einem der vorhergehenden Ansprüche, **dadurch gekennzeichnet, dass** der Verstellmotor (6; 6') hinsichtlich seiner Verstellbewegung in Abhängigkeit von vorgegebenen Parametern, wie beispielsweise der Drehzahl des Verbrennungsmotors (2), steuer- bzw. regelbar ist.

9. Vorrichtung nach einem der vorhergehenden Ansprüche, **dadurch gekennzeichnet, dass** zwei Verstellmotoren (6, 6') und zwei Getriebe (5, 5'; 5") zum Verstellen der Drehlage von zwei Nockenwellen (3, 3') relativ zur Drehlage der Antriebswelle (4) vorgesehen sind, wobei vorzugsweise jede Nockenwelle (3, 3') separat von einem der Verstellmotoren (6, 6') über eines der Getriebe (5, 5'; 5'') hinsichtlich der Drehlage verstellbar ist.

10. Vorrichtung nach Anspruch 9, **dadurch gekennzeichnet, dass** beide Getriebe (5, 5'; 5") die Getriebestufe (9') gemeinsam nutzen.

11. Vorrichtung nach Anspruch 9 oder 10, **dadurch gekennzeichnet, dass** die Getriebestufe (9'), insbesondere wenigstens ein Getrieberad (22') der Getriebestufe (9'), zwischen den beiden Getrieben (5, 5') angeordnet ist.

12. Vorrichtung nach einem der vorhergehenden Ansprüche, **dadurch gekennzeichnet, dass** das als Spannungswellengetriebe (5; 5'; 5'') ausgebildete Getriebe in Topfbauweise oder Flachbauweise ausgebildet ist, insbesondere mit einem Wellengenerator (17), einem Flexspline (18; 19), einem Circular Spline (20) und ggf. einem Dynamic Spline (21).

13. Vorrichtung nach Anspruch 12, **dadurch gekennzeichnet, dass** bei einem Spannungswellengetriebe (5; 5') in Topfbauweise die Abtriebswelle (7) des Verstellmotors (6; 6') mit dem Wellengenerator (17), die Nockenwelle (3, 3') mit dem Flexspline (18) oder dem Circular Spline (20) und die Antriebswelle (4), vorzugsweise über den Steuertrieb (10, 10'), mit dem Circular Spline (20) oder dem Flexspline (18) drehfest verbunden sind.

14. Vorrichtung nach Anspruch 12, **dadurch gekennzeichnet, dass** bei einem Spannungswellengetriebe (5'') in Flachbauweise die Abtriebswelle (7) des Verstellmotors (6) mit dem Wellengenerator (17), die Nockenwelle (3, 3') mit dem Dynamic Spline (21) oder dem Circular Spline (20) und die Antriebswelle (4), vorzugsweise über den Steuertrieb (10, 10'), mit dem Circular Spline (20) oder dem Dynamic Spline (21) drehfest verbunden sind.

15. Vorrichtung nach einem der Ansprüche 12 bis 14, **dadurch gekennzeichnet, dass** der Circular Spline (20) oder der Dynamic Spline (21) zugleich ein Getrieberad (23) der Getriebestufe (9, 9') bildet, wobei insbesondere das Getrieberad (23) an dem Circular Spline (20) bzw. dem Dynamic Spline (21) angeformt ist.

16. Vorrichtung nach einem der Ansprüche 12 bis 14, **dadurch gekennzeichnet, dass** der Steuertrieb (10; 10') und die Getriebestufe (9; 9') über eine gemeinsame Welle (24; 25) miteinander wirkverbunden sind.

17. Vorrichtung nach Anspruch 16, **dadurch gekennzeichnet, dass** bei einem Verbrennungsmotor (2) mit zwei Nockenwellen (3, 25), von denen lediglich eine der Nockenwellen (3) hinsichtlich ihrer Drehlage relativ zur Drehlage der Antriebswelle (4) verstellbar ist, die nicht-verstellbare Nockenwelle (25) als die gemeinsame Welle genutzt ist.

18. Vorrichtung nach einem der vorhergehenden Ansprüche, **dadurch gekennzeichnet, dass** der Steuertrieb (10) ein mit der Antriebswelle drehfest verbundenes erstes Antriebsrad (26) und ein zweites Antriebsrad (28) aufweist, welche mittels Übertragungsglied (27), wie beispielsweise eine Kette oder Zahnriemen, miteinander gekoppelt sind, wobei das zweite Antriebsrad (28) über die Getriebestufe (9; 9) die wenigstens eine Nockenwelle (3; 3') antreibt.

19. Vorrichtung nach einem der vorhergehenden Ansprüche, **dadurch gekennzeichnet, dass** die wenigstens eine Getriebestufe ein Stirnradgetriebe (9; 9') ist.

20. Vorrichtung nach einem der vorhergehenden Ansprüche, **dadurch gekennzeichnet, dass** die Vorrichtung (1) zusammen mit der wenigstens einen Nockenwelle (3, 3') oberhalb der Antriebswelle (4) angeordnet ist.

21. Fahrzeug mit einer Verbrennungskraftmaschine (2), enthaltend eine Vorrichtung (1) nach einem der vorhergehenden Ansprüche.
